# EUROPÄISCHE PATENTSCHRIFT

(11) **EP 1 262 704 B1**
(45) Veröffentlichungstag und Bekanntmachung des Hinweises auf die Patenterteilung: **13.04.2005**
(21) Anmeldenummer: 02003394.0
(22) Anmeldetag: 14.02.2002
(51) Int. Cl.: F16L 25/00, F16L 39/02, F16L 39/00, H02G 3/06, A47L 9/24

(54) **Muffe zum Koppeln von Mehrkanalrohren**
Union for multi-channel tubes
Manchon de raccord de tubes multi-canaux

(30) Priorität: 29.05.2001 DE 20108878 U
(43) Veröffentlichungstag der Anmeldung: 04.12.2002
(73) Patentinhaber: TRUPLAST KUNSTSTOFFTECHNIK GMBH, D-35428 Langgöns (DE)
(72) Erfinder: Linhart, Georg, 61206 Wöllstadt (DE)
(74) Vertreter: Oppermann, Mark, Dipl.-Ing.

(56) Entgegenhaltungen:
- DE-U- 20 001 357
- DE-U- 29 800 808

## Beschreibung

Die Erfindung bezieht sich auf eine Muffe zum gleichachsigen Koppeln zweier gleich ausgebildeter Schlauchabschnitte nach dem Oberbegriff des Anspruches 1.

Es ist bereits eine Muffe nach dem Oberbegriff des Anspruches 1 aus DE 29800808U bekannt. Um einen Stoß der aufeinander zuweisenden Enden der Schlauchabschnitte zu überdecken, ist eine Schraubbuchse vorgesehen, deren Außendurchmesser größer ist als der AußenDurchmesser der Schlauchabschnitte. Die bekannte Muffe hat sich zwar bewährt. Bei der Handhabung der gekoppelten Schlauchabschnitte kann es jedoch vorkommen, daß die Enden der Schraubbuchse an Möbeln oder dergleichen anecken.

Es ist auch eine der vorgenannten Muffe ähnlich ausgebildete Muffe bekannt, mit der zwei Rohrabschnitte miteinander verbindbar sind, die eine gewellte Außenwand und eine glatte oder entgegengesetzt gewellte Innenwand aufweisen. Zwischen den aufeinander zuweisenden Rohrenden ist ein Dichtungsring vorgesehen. Die Rohrenden sind von einem aufklappbaren Verriegelungsring umgriffen, mit dem die Rohre zusammengehalten und die Rohrenden gegen den Dichtungsring angepreßt werden. Auch hier überragt ein Bauteil die zu koppelnden Rohre. Zudem ist eine Dichtung erforderlich, um ein Austreten eines strömenden Mediums in die Umgebung zu verhindern ( DE-OS 26 42 283).
Aufgabe der Erfindung ist es, eine Muffe der im Oberbegriff des Anspruches 1 genannten Art zu schaffen, bei der die zu koppelnden Schlauchabschnitte nicht von einem Muffenbauteil überragt sind, und eine Dichtung zwischen den Schlauchabschnitten entbehrlich ist.

Die gestellte Aufgabe wird durch die im kennzeichnenden Teil des Anspruches 1 genannte Ausbildung gelöst.

Zweckmäßige Aus- und Weiterbildungen des Erfindungsgegenstandes sind in den Ansprüchen 2 und 3 angegeben.

Ein Ausführungsbeispiel der Erfindung ist in der Zeichnung rein schematisch dargestellt. Es zeigen:
- Fig.1:: einen Aufriß, teilweise im Schnitt.
- Fig. 2:: eine Vergrößerung des in Fig. 1 strichpunktiert umrandeten Zeichnungsteils.
- Fig. 3:: eine perspektivische Darstellung einer Muffe.

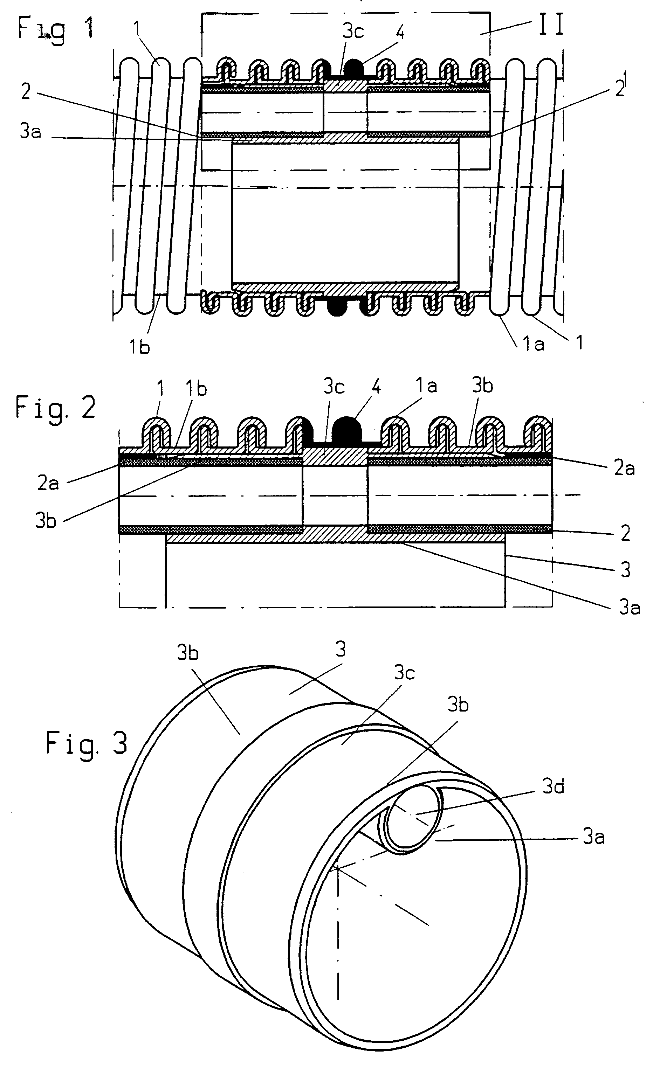

In der Zeichnung sind mit 1 zwei gleich ausgebildete Schlauchabschnitte bezeichnet, die innen glatt sind und außen wendelförmig verlaufende Wellenberge 1a und Wellentäler 1b aufweisen. Die Schlauchabschnitte 1 sind durch wendelförmiges Wickeln eines aus thermoplastischem Kunststoff bestehenden Profilbandes gebildet, das einen Radialsteg und ein Hakenteil sowie einen den Radialsteg mit dem Hakenteil verbindenden Axialsteg aufweist. Im Zuge des Wickelns übergreift das Hakenteil eines Wendelganges jeweils den Radialsteg eines benachbarten Wendelganges und ist mit diesem verbunden (Fig. 1 und 2). Die beschriebene Art der Wicklung ist seit langem bekannt.

Die Schlauchabschnitte 1 weisen jeweils einen an ihrer Innenwand befestigten Schutzschlauch 2 für nicht dargestellte elektrische Leiter auf. Anstelle der Aufnahme von elektrischen Leitern, kann der Schutzschlauch 2 auch zum Leiten eines strömenden Mediums, zum Beispiel einer Reinigungsflüssigkeit, verwendet werden.

Mit 3 ist eine Muffe bezeichnet, die vergrößert in Fig. 3 perspektivisch dargestellt ist. An der Innenseite der Muffe 3 ist ein Durchgangskanal 3a angeformt, in den die Enden der Schutzschläuche 2 der Schlauchabschnitte 1 eingreifen. Die Muffe 3 ist ferner mit zwei zum Aufstecken der Schlauchabschnitte 1 ausgebildeten Schaftabschnitten 3b (Fig. 3) versehen und weist einen mittigen Ringbund 3c auf, der als Anschlag für die auf die Schaftabschnitte 3b aufgesteckten Schlauchabschnitte 1 dient.

Der Durchgangskanal 3a ist ringsum geschlossen, damit von außen nichts in ihn eindringen kann (Fig. 3).
Jedes Ende des in die Muffe 3 eingreifenden Schutzschlauches 2 ist von der Wand des zugeordneten Schutzschlauches 1 abgelöst, um den Scheitel 3d des Durchgangskanals 3a ungehindert in den jeweiligen Schlauchabschnitt 1 einschieben zu können. Mit anderen Worten, die Befestigung 2a des Schutzschlauches 2 an der Innenseite des zugeordneten Schlauchabschnittes 1 reicht maximal nur bis zum zugeordneten Ende des Schaftabschnittes 3b der Muffe 3 und ist dann abgelöst. Die Ablösung der Befestigung 2a des Schutzschlauches 2 von der Innenseite des zugeordneten Schlauchabschnittes 1 ist vergrößert in Fig. 2 dargestellt.

Auf den Ringbund 3c der Muffe 3 ist ringsum ein Kunststoffmaterial 4 aufgebracht, dessen Außenkontur gleich der Außenkontur der Schlauchabschnitte 1 ist und stoßfrei glatt in die Konturen der Schlauchabschnitte 1 übergeht (Fig.1 und 2). Das Kunststoffmaterial 4 kann auf den Ringbund 3c aufgespritzt oder durch Gießen aufgebracht sein.

Zweckmäßig ist das auf den Ringbund 3c aufgebrachte Material 4 gleich oder annähernd gleich dem für die Schlauchabschnitte 1 verwendeten Material und hat die gleiche Farbe wie dieses.

Ferner ist es zweckmäßig, daß die Breite des auf den Ringbund 3c aufgebrachten Materials 4 mindestens über einen Teil des Umfanges des Ringbundes 3c gleich der Breite eines Wellenberges 1a der Schlauchabschnitte 1 plus etwa der Breite zweier angrenzender Wellentäler 1 b der Schlauchabschnitte 1 ist.

## Patentansprüche

1. Muffe (3) zum gleichachsigen Koppeln zweier gleich ausgebildeter Schlauchabschnitte (1), die innen glatt sind und außen wendelförmig verlaufende Wellenberge (1a) und Wellentäler (1b) aufweisen sowie einen an ihrer Innenseite befestigten, für die Aufnahme elektrischer Leiter dienenden Schutzschlauch (2) tragen, dessen im Muffeninnern liegendes Ende von einem an der inneren Muffenwand angeformten Durchgangskanal (3a) umgriffen ist, während der Muffenmantel zwei zum Aufstecken der zugeordneten Schlauchabschnitte (1) ausgebildete Schaftabschnitte (3b) und einen mittigen Ringbund (3c) als Anschlag für die Enden der Schlauchabschnitte (1) aufweist, **dadurch gekennzeichnet, daß** der Durchgangskanal (3a) ein ringsum geschlossenes Rohr ist; daß jedes Schutzschlauchende für das ungehinderte Einschieben des Scheitels des Durchgangskanals (3a) in den zugeordneten Schlauchabschnitt (1) von der Innenseite des zugeordneten Schlauchabschnittes (1) abgelöst ist, und daß auf den Ringbund (3c) ringsum ein Kunststoffmaterial (4) aufgebracht ist, dessen Außenkontur gleich den Außenkonturen der benachbarten Schlauchabschnitte (1) ist und stoßfrei glatt in deren Außenkonturen übergeht.

2. Muffe (3) nach Anspruch 1, **dadurch gekennzeichnet, daß** das auf den Ringbund (3c) aufgebrachte Material (4) gleich dem Material der Schlauchabschnitte (1) ist und die gleiche Farbe wie die Schlauchabschnitte (1) aufweist.

3. Muffe (3) nach Anspruch 1 und 2, **dadurch gekennzeichnet, daß** die Breite des auf den Ringbund (3c) aufgebrachten Materials (4) mindestens über einen Teil des Umfanges des Ringbundes (3c) gleich der Breite eines Wellenberges (1a) der Schlauchabschnitte (1) plus etwa der Breite zweier angrenzender Wellentäler (1b) der Schlauchabschnitte (1) ist.

## Claims

1. Sleeve (3) for the equiaxial coupling of two identically constructed hose portions (1), which are internally smooth and externally have helically directed wave crests (1a) and wave valleys (1b) and carrying a protective hose (2), used for receiving electrical conductors, and fixed to the inside thereof, the end of said hose located in the sleeve interior being embraced by a passage channel (3a) shaped onto the inner sleeve wall, whilst the sleeve jacket has two shaft portions (3b) for engaging the associated hose portions (1) and a central collar (3c) as a stop for the ends of the hose portions (1), **characterized in that** the passage channel (3a) is an all-round, closed tube, that each protective hose end is detached from the inside of the associated hose portion (1) for the unimpeded insertion of the top of the passage channel (3a) into the associated hose portion (1) and that all round the collar (3c) is applied a plastics material (4), whose outer contour is the same as the outer contours of the adjacent hose portions (1) and passes in shock-free, smooth manner into the outer contours thereof.

2. Sleeve (3) according to claim 1, **characterized in that** the material (4) applied to the collar (3c) is the same as the material of the hose portions (1) and has the same colour as the hose portions (1).

3. Sleeve according to claims 1 and 2, **characterized in that** the width of the material (4) applied to the collar (3c), at least over part of the circumference of said collar (3c), is the same as the width of a wave crest (1a) of the hose portions (1), plus approximately the width of two adjacent wave valleys (1b) of the hose portions (1).

## Revendications

1. Manchon (3) pour accoupler ou raccorder selon un même axe, deux tronçons de fourreau tubulaire (1) de configuration identique, qui sont lisses à l'intérieur et présentent à l'extérieur des sommets d'onde (1a) et des creux d'onde (1b) s'étendant en forme d'hélice, et qui comportent, fixé sur leur côté intérieur, un fourreau tubulaire de protection (2) servant à recevoir des conducteurs électriques et dont l'extrémité située à l'intérieur du manchon est entourée par un canal de passage (3a) formé sur la paroi intérieure du manchon, tandis que l'enveloppe de manchon présente deux tronçons de corps tubulaire (3b) conçus pour l'emmanchement des tronçons de fourreau tubulaire (1) associés, ainsi qu'une collerette annulaire centrale (3c) en tant que butée pour les extrémités des tronçons de fourreau tubulaire (1), **caractérisé en ce que** le canal de passage (3a) est un tube fermé sur toute sa périphérie, **en ce que** chaque extrémité de fourreau tubulaire de protection est détachée du côté intérieur du tronçon de fourreau tubulaire (1) associé pour permettre une insertion libre de l'extrémité frontale du canal de passage (3a) dans le tronçon de fourreau tubulaire (1) associé, et **en ce que** sur la collerette annulaire (3c) est rapporté, sur toute la périphérie, un matériau du genre matière plastique (4) dont le contour extérieur est identique aux contours extérieurs des tronçons de fourreau tubulaire (1) voisins, et se raccorde de manière lisse et sans interstice de jointure aux contours extérieurs de ces derniers.

2. Manchon (3) selon la revendication 1, **caractérisé en ce que** le matériau (4) rapporté sur la collerette annulaire (3c) est identique au matériau des tronçons de fourreau tubulaire (1) et présente la même couleur que les tronçons de fourreau tubulaire (1).

3. Manchon (3) selon la revendication 1 et 2, **caractérisé en ce que** la largeur du matériau (4) rapporté sur la collerette annulaire (3c) est égale, au moins sur une partie de la périphérie de la collerette annulaire (3c), à la largeur d'un sommet d'onde (1a) des tronçons de fourreau tubulaire (1) plus environ la largeur de deux creux d'onde voisins (1b) des tronçons de fourreau tubulaire (1).
